# EUROPEAN PATENT APPLICATION

(11) **EP 2 613 252 A1**
(43) Date of publication of application: **10.07.2013**
(21) Application number: 11820976.6
(22) Date of filing: 05.07.2011
(51) Int. Cl.: G06F 9/44

(54) **METHOD AND SYSTEM FOR REALIZING GRAPHICAL USER INTERFACE**

(30) Priority: 30.08.2010 CN 201010266145
(71) Applicant: Trekiz Network Technology (Beijing) Co., Ltd, Beijing 100016 (CN)
(72) Inventor: TIAN, Wenqing, Beijing 100016 (CN)
(74) Representative: Legg, Cyrus James Grahame
(86) International application number: PCT/CN2011/001107
(87) International publication number: WO 2012/027946

(57) **Abstract**

The technical solution discloses a graphical user interface. The graphical user interface has the function of responding to multiple kinds of operation requests from a user to a draggable module and controlling a client to draw a corresponding interface by corresponding instructions returned by a server. The technical solution is applied in a dynamic interaction system field in which a plurality of operation objects are operated, and achieves the effects of improving the user experience and facilitating the user arrangement.

## Description

### Field of the Invention

The present invention relates to a man-machine interactive system capable of operating on multiple objects, particularly relates to the user interface (UI, User Interface) used in the World Wide Web.

### Background of the Invention

People often make a list of the plans for the current or the future by means of a two-dimensional table, such as a curriculum schedule. The curriculum schedule is a paper task table originally. Wherein the date is placed on the horizontal axis and the time is placed on the vertical axis. With the development of network, this paper task table is designed as electronic form for transmission. The same as the paper form, a modern calendar table is also designed as a two-dimensional structure. The horizontal axis is a time tab representing a day of 24 hours, while the vertical axis is a date tab. Calendars of Google®, Outlook® and Exchange®, and some other similar software also use this type of structure to facilitate people's daily life. This type of calendar overlooks one important thing that different tasks may contain more than one of the same attribute.

Taking a simple example, someone wants to buy some books during some dates, then a shopping list needs to be made. He / she has two choices. One is to make a table containing only the date. This means that this person needs to make a shopping list under each date, for example, buy Physical 1, Physical 2 and Physics 3 on July 2nd, buy Math 1, Math 2 and Math 3 on July 3rd. However, after careful study, these books have two same attributes: one is the date, and the other is the subject. Therefore, this person can use a two-dimensional table to describe this list. The horizontal axis is the date tab, and the vertical axis is the subject tab. So, this person only need to put some numbers or names of the books in the flat table determined by the two tabs. This table can also be easily extended. When having plenty of books to buy, the convenience of this table will be particularly prominent.

As another example, when a tendering company is arranging their business, each tender meeting will have three attributes as time, date and place. For example, in the morning of September 5th at 9 to 11 there's a tender meeting in Anhui Bengbu, other tender meetings in this city are at 10 to 12 in the morning of September 6th, and at 3 to 5 in the afternoon of September 7th. There are two tender meetings in Anhui Wuhu, one at 9 to 11 in the morning of September 8th, the other at 2 to 4 in the afternoon of September 11th. So the company can make a task table with three-dimensional coordinates. The time belongs to the horizontal axis, the date belongs to the vertical axis, and the place, as similar to Z axis, determines the date and time which own the axis. Then the company will arrange tender meetings at time corresponding to dates September 5th, 6th and 7th in the the plane determined by the place for Anhui Bengbu. The occurrence of such task table greatly facilitates the meeting time management of the company. In fields such as travel planning, production planning, goods purchasing, and so on, the user interface in form of such task table is also required.

### Summary of the Invention

The present invention provides a method for implementing a graphic user interface, which is capable of manipulating multiple visual units, including:
in response to a user's request for adding a first visual unit, rendering a first plane with X axis dimension and Y axis dimension in a display device; and rendering in the area adjacent to the first plane a first Z axis dimension tab, wherein the first Z axis dimension tab is associated with the first plane and the attribute value of the Z dimension tab is associated with the value of a first attribute of the first visual unit; rendering the first visual unit in the first plane;
in response to a user's request for adding a second visual unit, if the value of first attribute of the second visual unit has association relationship with the attribute value of the first Z axis dimension tab, rendering the second visual unit in the first plane; and,
in response to a user's drag operation, the first visual unit and the second visual unit can be moved in the first plane.

In a further embodiment, the method for implementing the graphic user interface provided by the present invention, wherein,
if the value of the first attribute of the second visual unit does not have association relationship with the attribute value of the first Z axis dimension tab, then rendering a second Z axis dimension tab in an adjacent position of the first Z axis dimension tab, wherein the second Z axis dimension tab has the attribute value associated with the value of the first attribute of the second visual unit, and rendering a second plane in a position adjacent to the second Z axis dimension tab, wherein the second plane also has a X axis dimension and a Y axis dimension, rendering the second visual units in the second plane; and, in response to user's drag operation, the first visual unit can be moved in the first plane, the second visual unit can be moved in the second plane.

In a further embodiment, the method for implementing a graphic user interface provided by the present invention, wherein,
in response to the user's request for activating the first Z axis dimension tab, hiding the second plane, and showing the first plane;
in response to the user's request for activating the second Z axis dimension tab, hiding the first plane, and showing the second plane.

In a further embodiment, the method for implementing a graphic user interface provided by the present invention, wherein,
in response to a user dragging the first Z axis tab to the position of the second Z axis tab, exchanging positions of the first Z axis tab and the second Z axis tab, after the exchange the first Z axis tab is associated with the first plane, and the second Z axis tab is associated with the second plane.

In a further embodiment, the method for implementing a graphic user interface provided by the present invention, wherein,
the first visual unit has a second attribute, in response to a user's drag operation, the second attribute will restrict the scope in which the first visual unit can be moved on the X axis dimension of the first plane.

In a further embodiment, the method for implementing a graphic user interface provided by the present invention, wherein,
the first visual unit has a third attribute, in response to a user's drag operation, the third attribute will restrict the scope in which the first visual unit can be moved on the Y axis dimension of the first plane.

In a further embodiment, according to the method for implementing a graphic user interface provided by the present invention, if the target position of the drag operation on the visual unit exceeds the scope of action restricted by the first attribute, the second attribute or the third attributes, then the first visual unit is returned to the starting position of the drag operation, or a prompt message is displayed.

In a further embodiment, the method for implementing a graphic user interface provided by the present invention, includes, in response to a user's request for stretching the first visual units along the X axis dimension, changing the length of the first visual unit along the X axis dimension.

In a further embodiment, the method for implementing a graphic user interface provided by the present invention, includes, in response to a user's request for adding one or more segments to the first plane along the Y axis dimension, increasing the length of the first plane along the Y axis dimension in proportion to the number of requested adding segment, the second attributes of the first visual unit is associated with one or more Y axis segments, and the first visual unit can be moved in the first plane.

In a further embodiment, the method for implementing a graphic user interface provided by the present invention, includes, in response to a user's request for deleting the segment last added to the first plane along the Y axis dimension, checking if there is any visual unit in the segment last added to the first plane, if there isn't any, then changing the length of the first plane along the Y axis dimension, so as not to display the segment last added along the Y axis dimension, wherein the first visual unit can be moved in the first plane;
if there is any, then displaying a prompt message.

In a further embodiment, the method for implementing a graphic user interface provided by the present invention, includes in response to a user's request for deleting the first visual unit, canceling the display of the first visual unit; and in response to a user's request for deleting the second visual unit, canceling the display of the second visual unit.

In a further embodiment, the method for implementing a graphic user interface provided by the present invention, includes in response to a user's request for deleting the first Z axis dimension tab,
if there is no visual unit in the first plane, clearing the first Z axis dimension tab and the first plane displayed on the display device,
if there is one or more visual units in the first plane, displaying a prompt message.

In a further embodiment, the method for implementing a graphic user interface provided by the present invention, includes in response to user's drag operation to the first visual unit, when the first visual unit is dragged to the position overlapping the second visual units, tiling the first visual unit and the second visual unit along the X axis dimension to eliminate the overlapping.

In a further embodiment, the method for implementing a graphic user interface provided by the present invention, includes in response to a user's request for adding the first visual unit or the second visual unit, acquiring the attribute information of the first visual unit or the second visual units from the a; in response to the user's drag operation to the first visual unit or the second visual units, sending the coordinate information of the X axis and Y axis dimension in which the first visual unit or the second visual unit is placed to the server.

In a further embodiment, the method for implementing a graphic user interface provided by the present invention, includes in response to a user dragging the first Z axis tab to the position of the second Z axis tab, sending the position value of the first Z axis tab after the exchange with the second axis Z tab to the server.

In a further embodiment, the method for implementing a graphic user interface provided by the present invention, includes in response to the user's drag operation, sending coordinate information of the position in which the dragged visual unit placed to the server, then the server determines whether the target position of the drag operation to the visual unit exceeds the scope in which activities are restricted by the first, the second attribute, or the third attribute.

In a further embodiment, the method for implementing a graphic user interface provided by the present invention, also includes, sending the initial and ending coordinates of the first visual unit along the X axis dimension to the server.

In a further embodiment, the method for implementing a graphic user interface provided by the present invention, includes if the display of the first visual unit or the second visual unit is cancelled, sending the information of deleting the first visual unit or the second visual unit to the server.

In a further embodiment, the method for implementing a graphic user interface provided by the present invention, also includes sending the coordinates along the X axis dimension and the coordinates along the Y axis dimension of the first visual unit and the second visual unit to the server.

In a further embodiment, the method for implementing a graphic user interface provided by the present invention, wherein the first attribute of the visual unit is location, the second attribute is time, and the third attribute is date.

In a further embodiment, the method for implementing a graphic user interface provided by the present invention, wherein the visual unit is the icon, button, tab or layer.

In a further embodiment, according to the method for implementing a graphic user interface provided by the present invention, the tab is not limited to the Z axis dimension.

In a further embodiment, the method for implementing a graphic user interface provided by the present invention, wherein the X axis dimension extends along the horizontal direction, and the Y axis dimension extends along the vertical direction.

A system for implementing a graphic user interface capable of manipulating multiple visual units is also provided in the present invention, includes:
a first module, used for in response to a user's request for adding the a visual unit, rendering a first plane with X axis dimension and Y axis dimension on the display device; and rendering a first Z axis dimension tab in an area adjacent to the first plane, wherein the first Z axis dimension tab is associated with the first plane, and the attribute value of the first Z axis dimensions tab is associated with the value of the attribute of the first visual unit; and rendering the first visual unit in the first plane;
a second module, used for in response to a user's request for adding a second visual unit, if the value of the first attribute of the second visual unit has association relationship with the attribute value of the first Z axis dimension tab, rendering the second visual unit in the first plane; and,
a third module, used for in response to user's drag operation, the first visual unit and the second visual unit can be moved in the first plane.

### Description of the Drawings

Figure 1 depicts the initial state of the user interface displayed in a user terminal in the embodiment of the present invention.

Figure 2 depicts how to carry out 4 different command operations on objects in the user interface.

Figure 3 depicts the user interface with a visual unit added in.

Figure 4 depicts the relationship between visual units, user interface, a server and a database.

Figure 5 depicts the user interface, with multiple visual units, in which a new visual unit is added.

Figure 6 (a) depicts the user interface after the deletion of the visual unit 310_01 in Figure 5.

Figure 6 (b) depicts the user interface after the deletion of the layer 320_03.

Figure 6 (c) depicts the user interface after the deletion of a Z axis tab.

Figure 7 depicts the user interface after the exchange of two Z axis tabs in Figure 6 (b).

Figure 8 depicts the implementing flow chart of a user interface in another embodiment of the present invention.

Figure 9 depicts an embodiment of expanding the user interface of the present invention to a four- dimensional structure.

Figure 10 illustrates a computing device for implementing the user interface of the present invention.

### Detailed Description

For the purpose of promoting an understanding of the present invention, the embodiments mentioned in references will be used only as an application of the present invention, not at any time could the embodiments mentioned here limit the scope of the present invention. Any alternatives developed using the same theory of the present invention or any later improvements to this UI will be in the scope of protection claimed by the present invention.

The present invention is described in detail from a graphical UI design perspective, but the system can also serve other purposes in addition to the functions described here. On one hand, the one or more techniques described herein can be implemented as an extension of applications similar to electronic task table. On the other hand, the one or more techniques mentioned herein may also allow a developer to develop them into a multidimensional UI or other types.

The first embodiment of the present invention includes a user terminal and a back-end server providing functions of data storage and logic operation. The user terminal is in charge of rendering the interface and generating the user interaction effect, and the server in response to the user terminal requests, and making corresponding output based on the predetermined logic operation to assist the user terminal to complete the interaction effect of the UI. The following will introduce the present invention in state of real-time interaction between the client and the serve with a first embodiment. The present invention may also be implemented with less or without the aid of back-end server. The present invention in non real-time interaction mode will be described later.

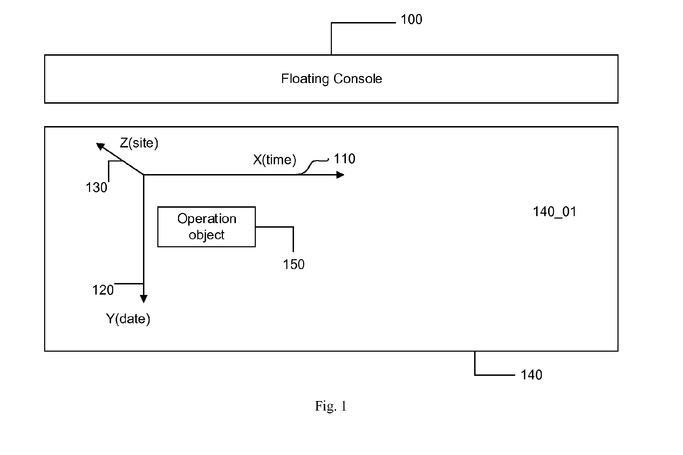

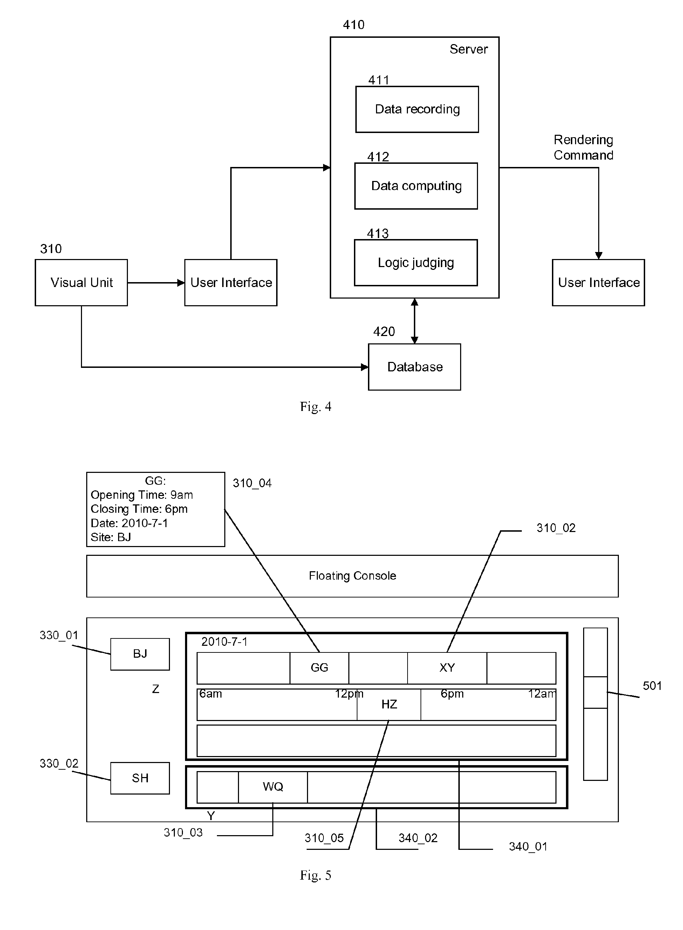

Figure 1 depicts the initial state of the user interface (UI) displayed at the user terminal according to the present invention. In order to define the position, it shows the floating console 100, which is suspended in the webpage to control multiple Web pages. Figure 1 shows the X axis coordinate 110, the Y axis coordinate 120 and the Z axis coordinate 130. As the default value of the 3 dimension coordinates 110, 120 and 130 is 0, the initial state of the UI 140 is a blank area under the floating console 100, the size of the area defined by the interface scope of UI 140. Accordingly, the server 410 (shown in Figure 4) may initialize the original data of UI 140 in X, Y, Z axis. When the user executes the commands such as adding (ADD), dragging (DRAG), deleting (DELETE) and exchanging (EXCHANGE), the UI 140 will be in response to different output instructions from the server 410 and complete the corresponding interface rendering effect to achieve the operations on an operation object 150. The following will describe the specific means of implementing each of the commands with the first embodiment.

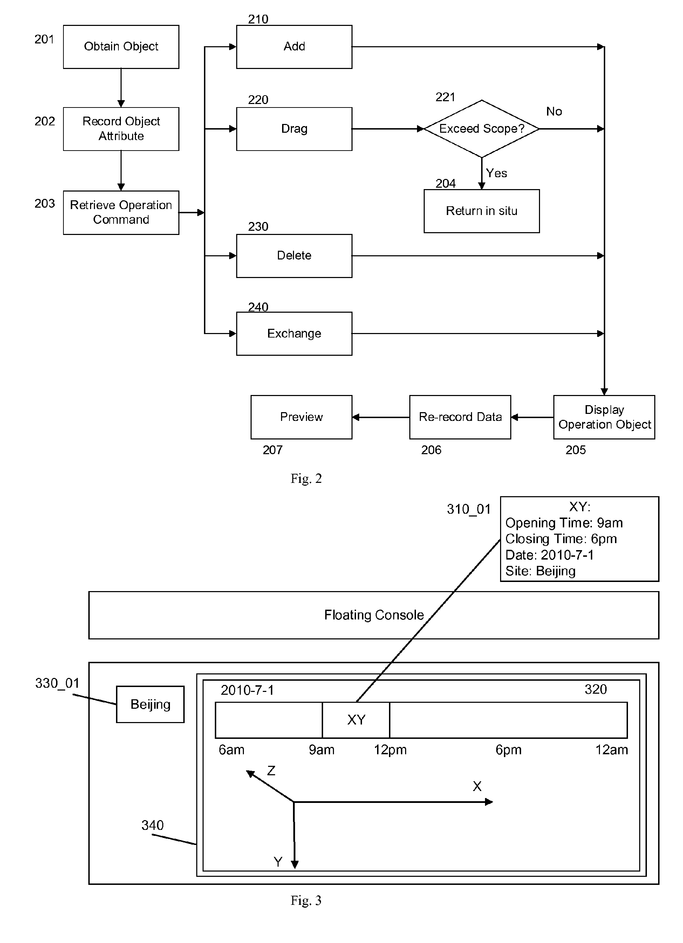

Figure 2 depicts how to carry out 4 different command operations on objects 150 in UI 140 of the present invention, in which the visual object 150 may be the visual unit 310_01, or may be the Y axis layer 320, and may also be the Z axis tab 330_01 (see Figure 3). In fact, the operating commands to the object 150 will not be limited to the 4 described herein as adding (ADD), dragging (DRAG), deleting (DELETE) and exchanging (EXCHANGE). Commands such as copying may also be achieved by similar technology teaching. Figure 4 depicts the relationship between the visual unit 310, UI 140, server 410 and database 420. The operation object 150 of the present invention can be multiple tabs, multiple layers or multiple visual units. The Z axis tab is indicated by drawing reference signs 330, such as the first Z axis tab 330_01, the second Z axis tab 330_02 (see Figure 5), and the visual units indicated by reference signs 310. Particularly, each visual unit can be the first visual unit 310_01, the second visual unit 310_02 and so on (see Figure 5). Figure 3 depicts the UI 140 with a first visual unit 310_01 added in. Figure 5 depicts the UI 140, with multiple visual units 310, in which a new visual unit 310_04 is added.

Visual units 310 that can be operated in the present invention each has some attributes, in which different attributes may correspond to different dimensions of UI 140. Data used to describe these attributes can be obtained from database 420 (shown in Figure 4). When the UI 140 obtains a visual unit 310 based on a request of a user, attribute data of the visual unit 310 will be extracted from the database 420, and recorded to a server 410. Server 410 has three functional units as data recording 411, data computing 412 and logical judging 413. In an alternative embodiment, the server 410 may also have other types of operation. When the attribute data of the visual unit 310 is recorded by the server 410, the logical judging unit 413 of the server 410 may judge the visual unit 310, of which the judgments including but not limited to: whether the Z axis tab corresponding to the attribute of visual unit 310 has been added, whether the visual unit 310 has been added to the UI 140, and whether the visual unit 310 has been fixed in the UI 140. The fixing means the visual units 310 in the UI 140 can't be dragged. The actual meaning of fixing may be the items have already been bought, events have been executed, and the conference have been booked. After the access to the database 420 and the logic judging by the server 410, it may indicate the user terminal to execute a variety of renderings of the user interface 140 by the returned logic value.

In other embodiments, the attribute information associated with visual unit 310 can also be stored in the computer running the UI 140, for example, stored in the Web page containing the UI 140, and the operation as data recording 411, data computing 412 and logical judging 413 executed by the server 410 in the first embodiment can be executed by browser scripts or other native codes.

Add visual unit 310 to the UI 140

1. When the returned value shows that the Z axis tab corresponding to the visual unit 310 is not added, and the visual unit 310 is not added, a new plane 340 need to be rendered in the UI 140, and the visual unit 310 is rendered in the plane. The visual units 310 in this embodiment may have three attributes: time, date and site. Different attributes correspond to different dimensions. For example, X axis dimension 110 extending along the horizontal direction indicates the attribute "time", the Y axis dimension 120 extending along vertical direction indicates the attribute "date", and the area tab adjacent to plane 340 determined by the X axis dimension and Y axis dimension, which corresponds to the Z axis dimension 130, herein indicates the attribute "site", as shown in Figure 1 and Figure 3. In Figure 3, the Z axis dimension extends along the left side of the plane 340. As an alternative, the Z axis dimension can also be set in other areas adjacent to the plane 340. Visual units 310 constrained by the three coordinate dimensions may have a certain dragging scope limit. The dragging scope limit will be described in the dragging command.

When the UI 140 obtains a visual unit 310, it may first in the X axis dimension 110 display a layer 320 with proper length, which can be divided into different segments in the direction of X axis, used to indicate different scope intervals. The layer 320 has a segment corresponding to an initial height in the Y direction, one section indicating one day of the date attribute. Visual units 310 is rendered in the layer 320, and the size and location where the visual units 310 are rendered in the layer 320, are determined based on the attribute values of the visual units 310. For example, based on the time / date attribute as July 1st 12 to 6 pm, the visual unit 310 is rendered in the position on the X axis corresponding to the time scope, as well as in the section on the Y axis corresponding to the date. User can drag the visual unit 310 in the layer 320, or perform stretching or shrinking operation along the X axis direction to the visual unit 310. Through calculating relative coordinates of the visual unit 310 and the layer 320 in different segments, the starting and ending coordinates the visual unit 310 corresponding to in the X axis direction after the stretching or shrinking operations by the user can be determined. The coordinates of the visual unit 310 can be determined on the local computer running the UI 140, and also on the server 410.

About the attribute value of the visual unit 310, it can be obtained from the database 420 by the server 410, and it can also be input by a user in the UI 140 or other position. Attribute value of the visual unit 310 can also be stored in the local computer running UI 140.

Next, as the return logic value shows that the Z axis tabs corresponding to the attribute of the visual unit 310 is not added, on the Z axis dimension 130 of the UI 140 a new tab 330_01 (tab 330_01 in Figure 3) will be added, the content of which is associated with the corresponding attribute value of the visual unit 310. In this embodiment, the content of the tab 330_01 indicates the site. All visual units 310 with the same site attribute will be corresponding to the same tab 330_01 in the Z axis dimension, and be rendered on the plane 340 formed by X axis dimension 110 and the Y axis dimension 120 corresponding to the tab 330_01. When a tab 330_01 is generated in the Z axis dimension 130, the server 410 will save and record the position of the tab 330_01 in the Z axis dimension (such as the position of the first tab or the second tab on the Z axis). Figure 3 shows the UI 140 with such a visual unit 310_01 added. At this time the visual unit 310_01 defined by user has a start time at 9am and an end time at 12pm.

2. When the return value shows that the Z axis tab corresponding to the visual unit 310 has been added and the visual unit 310 is not added yet, the plane corresponding to the Z axis tab has been rendered in the UI 140 at this time. Figure 5 shows the UI 140 with multiple visual units 310, in which a new visual unit 310_04 is added, where the site attribute value of the visual unit 310_04 is the same as the attribute value of the tab 330_01, thus according to the tab 330_01 it's determined that the plane 340_01 corresponding to the tab has been rendered in the UI 140, so only a new visual unit 310 need to be added in the determined plane 340_01.

If the new added visual unit 310 and other visual units 310 in the UI layer determined by the corresponding Z axis tab (for example, the UI layer with the tab 330_01) have time attributes overlapped, conflicts may occur. By sending the position information of multiple visual units 310 in the UI 140 to the server 410, the server 410 may calculate the movable areas of multiple visual units 310, process the collisions and output corresponding instructions to guide the rendering of the UI 140. In other embodiments, the movable areas and collision processing rules of multiple visual units, can also be processed on the local computer running the UI 140.

If the user increases the number of segments in the Y axis direction in the plane (e.g. plane 340_01) corresponding to a tab 330 (e.g. tab 330_01) with the UI 140, the UI 140 will increase the height of layer 320 in proportion to the increased number in the Y axis dimension 120 of the layer. Each segment in the Y axis direction may indicate a day in the date attribute. The increased number will be recorded to the offset of the tab 330_01. The server 410 can calculate the initial data of the following tab 330_02 in the Y axis dimension from this offset, as shown in Figure 5. Users may also delete the segments in the Y axis direction. See below specific in "delete object 150 in the UI 140". When the number of segments increased by users in the Y axis dimension exceeds the display scope limited by the boundary of the UI 140, a floating bar function will be called to indicate the UI 140 to render a floating bar 501. Users implement checking the entire Y axis dimension corresponding to a tab 330 by dragging the floating bar 501. In this embodiment, rendering the floating bar 501 can be carried out under control of the server 410, and can also be processed on the local computer running the UI 140.

3. When the return value shows that the Z axis tab corresponding to the visual unit 310 has been added, and the visual unit 310 is already added, at this time the existing visual unit 310 is displayed in the UI 140.

The visual unit 310 can also be moved and deleted. The implementation of the dragging operation will be described in detail below.

Drag a visual unit 310 in the UI 140

1. After the visual unit 310 is dragged and dropped, the UI 140 will transmit to the server 410 the information of the position to which the visual unit 310 has been dragged. The server 410 may detect the movable interval of the visual unit 310. The movable interval of a visual unit 310 is determined by one or more attributes of the visual unit. For example, the visual unit 310_04 mentioned in this embodiment has a time attribute limit, which will limit the visual unit only in the X axis dimension 110 consistent with the attribute. The time attribute of the visual unit 310 may indicate the opening and closing time, which limit the visual unit can only be dragged between 9AM to 6PM. When the visual unit 310 being dragged is dropped, the server 410 will compare the horizontal axis attribute value (time) of the visual unit 310 and the time attribute values (opening and closing time) in the database 420. If the logic is inconformity, then the "non-draggable" will be executed, and the dragged visual unit 310 will be returned back in situ. In other embodiments, the process of judging whether the visual unit 310 can be dragged may also be executed on the local computer running the UI 140.

2. A attribute of the visual unit 310 also limits the moving of the visual unit in the Y axis dimension 120. For example in the embodiment shown in Figure 3, the visual unit 310_01 is limited by its date attribute to move only in the Y axis dimension segment of the date 2010-7-1, and cannot be dragged to a Y axis segment corresponding to any other date. When the visual unit 310 being dragged is dropped, the server 410 will compare the Y axis attribute value (date) of an area in which the visual unit 310 is and the date attribute values of the visual unit 310 recorded in the database 420. If the logic is inconformity, then the "non-draggable" will be executed, and the dragged visual unit 310 will be returned back in situ.

3. A attribute of the visual unit 310 also limits the visual unit to moving only in the plane corresponding to the coincident Z axis dimension 130. For example in the embodiment shown in Figure 3, the visual unit 310_01 is limited by its attribute (Site: Beijing) to move only in the corresponding area with the Z axis dimension attribute (representing site) as Beijing, and cannot be moving in an area with the Z axis attribute value as Shanghai, Shenzhen or any other site. When the visual unit 310 being dragged is dropped, the server 410 will compare the attribute (site) value of the visual unit 310 itself and the Z axis attribute value representing the area in which the visual unit 310 is. If the logic is inconformity, then the dragging can't be executed, and the dragged visual unit 310 will be returned back in situ. When the dragging process is over, if the position of the visual unit 310 in the UI 140 is out of the scope limited by its corresponding attributes, the UI 140 may execute the "non-draggable" command, then the dragged visual unit of 310 will be returned back in situ. In practical applications, the execution of "non-draggable" can be replaced with a warning, or other identification such as popping up a dialog box. The dragging part in Figure 2 shows the logic operations before and after the dragging. In other embodiments, the process of judging whether the visual unit 310 can be dragged may also be executed on the local computer running the UI 140.

4. When the visual unit 310 is being dragged, if the user drags the visual unit 310 only in the X axis dimension 110, the visual unit 310 will only change its coordinate value on the X axis dimension. According to the position of the X axis dimensions 110, the server 410 may re-record the coordinate value of the visual unit 310. If the user drags the visual unit 310 only in the Y axis dimension 120, the visual unit 310 will only change its coordinate value on the Y axis dimension 120. The server 410 will calculate the current position of the visual unit 310 in the Y axis dimension 120. If the visual unit 310 is dragged at the same time both in the X axis dimension and the Y axis dimension, the server 410 will calculate the X axis dimension coordinate and the Y axis coordinate of the moved visual unit 310 at the same time, and store the calculated value.

Delete an object 150 in the UI 140

The delete command 230 in Figure 2 is also a significant operation in the UI 140. The delete operation can be divided as deleting the visual unit 310, reducing the number of the segments of the layer 320 in the Y axis dimension, and deleting the Z axis tab 330.

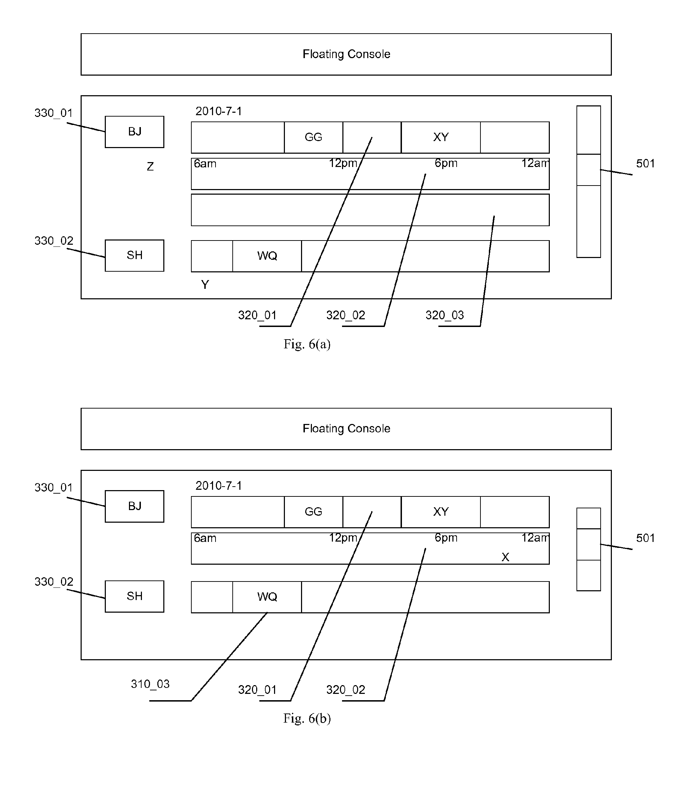

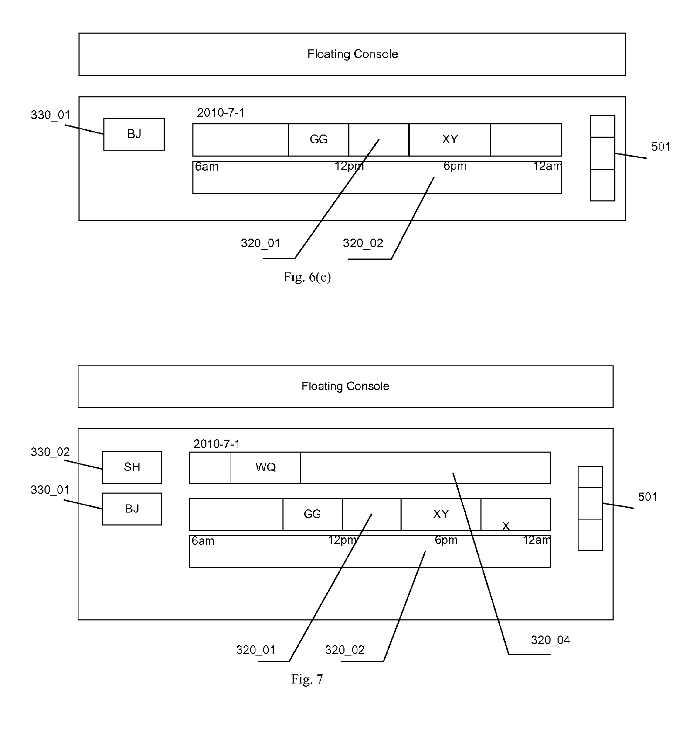

1. When the UI 140 responds to a command of deleting the visual unit 310, the server 410 is returned a clear sign, then the UI 140 will immediately clear the graphic display of the visual unit 310. The UI 140 with the visual unit 310_05 in Figure 5 removed is as shown in Figure 6 (a).

2. When the UI140 responds to a command of reducing the number of segments in the Y axis dimension on the layer 320, first it's determined whether the layer segment contains the visual unit 310. If it does, the "non-deletable" will be executed, or a dialog box will be poped up asking the user whether to delete the visual unit 310 of the layer. The determination step can be executed in the server 410, and also on the local computer running the UI 140. If the layer 320 does not contain any visible unit 310, as the layer segment 320_03 shown in Figure 6 (a), the server 410 will execute the "deletable" command, and the UI 140 will delete the graphic display of the layer 320 segment. After the layer segment 320_03 is deleted, the total length of the Y axis dimension in which the layer segment is will be reduced by one unit, and the offset associated with the Y axis dimension will be reduced accordingly. Figure 6 (b) shows the UI 140 after deleting a layer segment 320_03. In the UI 140 as shown in Figure 6 (a), the layer 320_02 after the visual unit 310_05 is deleted by the user is also the layer containing 0 of the number of the visual unit 310. After the user delete the layer segment 320_02, the layer segment 320_03 will replace the position of the layer segments 320_02. It is that if the user deletes a layer segment of the muti-line layer, all following layer segments' positions in the Y axis dimension will raise one unit.

3. When the UI 140 responds to a command of deleting a Z axis tab 330, first it's determined whether the number of the visual unit 310 with the tab attribute in the X axis dimension and Y axis dimension is zero or not, if it's not, the "non-deletable" will be executed, or a dialog box will be popped up asking the user whether to delete the visual units 310 corresponding to the tab 330 or not. The determination step can be executed in the server 410, and also on the local computer running the UI 140. If the number of the visual unit 310 corresponding to the tab 330_02 is zero, as shown in Figure 6 (b), after the visual unit 310_03 on the tab 330_02 is deleted, the Z axis tab 330_02 can be deleted. After the Z axis tab 330_02 is deleted, the server 410 will set the tab, the position data in the Z axis of the tab and the deviation value of the tab in the Y axis dimension to zero. If in the UI 140 there is a third Z axis tab 330_03 below the Z axis tab 330_02, the Z axis tab 330_03 will replace the position of the Z axis tab 330_02.

Exchange tabs 330 in the UI 140

The Z axis tabs 330 in the present invention can be exchanged. When the visual unit 310 is first created on the Z axis dimension, the server 410 will record its site attribute value, and the position value of its corresponding Z axis tab 330 in the Z axis dimension, such as the first position of the Z axis, the second position of the Z axis and so on. The Z axis tab 330 and its position in the Z axis constitute the Z axis coordinate data of the visible unit 310. As shown in Figure 5, the content code in the tab 330_01 is 3129, and its position in the Z axis is 01, then "3129 01" constitutes the Z axis coordinate data of all the visible units 310 belonging to the Z axis tab 330_01. When the user drags a Z axis tab to another Z axis tab and drop it down, the server 410 will exchange the data indicating the two Z axis tabs and the position data of the two Z axis tabs in the Z axis dimension, to complete the storage of the data of the two tabs exchanged. For example, after the exchange of the Z axis tab code 3129 in Z axis 01 position with the Z axis tab code 4213 in the Z axis 02 position, the exchanged data will be "3129 02" and "4213 01". The server 410 will re-record the exchanged data. Meanwhile, the plane 340_01 corresponding to the tab 330_01 will be exchanged with the plane 340_02 corresponding to tab 330_02. In a further embodiment, the visual units 310 in the plane 340_01 and 340_02 will change the data relevant to the Y axis coordinates according to the transformation of the Z axis dimension. As shown in Figure 7, it is the UI 140 in which the tab 330_01 and 330_02 in figure 6 (b) have been exchanged. After the exchange, the layer segment 320_04 will replace the layer segment 320_01 corresponding to the Z axis tab 330_01 in figure 6 (b), and the layer segment 320_04 will indicate the date attribute as 2010-7-1. The date attribute indicated by the layer segment 320_01 corresponding to the Z axis tab 330_01 will be re-calculated based on the number of the Y axis segments of the layers corresponding to all the Z axis tabs 330 before Z axis tab 330_01 in the Z axis dimension.

Overview

The UI 140 can also respond to the user's requests of overview. At this time, the server 410 will arrange all the visual units 310 in the UI 140 310 according to the sequence of the X axis dimension 110, Y axis dimension 120 and Z axis dimension, and the server 410 will calculate all parts requiring calculation in the visual units 310 respectively, such as the time accumulation, the distance accumulation, the price calculation and so on. Then the server 410 will return the calculated value to the UI 140 to display the total time, distance and price through the UI 140.

The process above introduces the UI 140 in the real-time interaction mode with the server 410 in the user terminal. In other embodiments, the user interface described in the present invention and its interaction process with the user can also be used in non real-time interaction mode. The non-real-time interaction mode includes a one-click submitting mode, and a local processing mode without network communication in which the server 410 is not required.

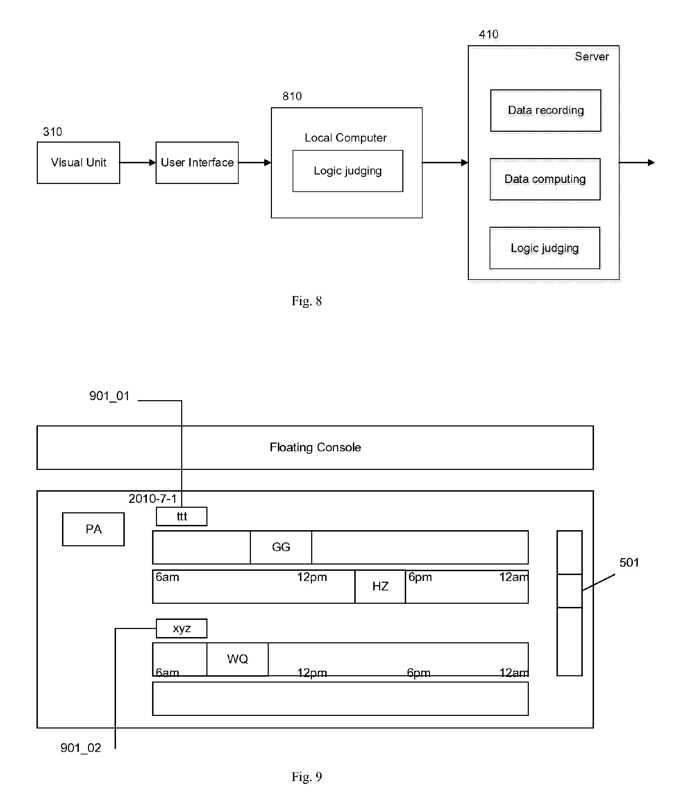

The interaction mode process of the onekey submission mode is shown in figure 8. At this point, the user will no longer transmit request to the server 410 when operating on each visual unit 310 in the UI140, and no need to wait for the return value of the server 410 to make a corresponding prompt or warning.

In the one-click submitting mode, the UI 140 will obtain attribute information of a plurality of alternative visual units 310, and submit a request to the server 410 after arranging the multiple visual units 310 on the UI 140. At this point, the server 410 will return the logic value to the UI 140 after the logic judging is done to the submitted visual unit 310, and the UI 140 will determine whether the submitting of the request succeeds or fails according to the logic value.

Before the UI 140 submits multiple visual units 310 to the server 410, all the operations in the UI 140 to the visual units 310, the Y axis layers 320 and the Z axis tabs 330 will be calculated logically and judged through the local computer(computer 810 in Figure 8) running the UI 140.

When the UI 140 responds to the user's request of adding a visual unit 310, the local computer 810 compares the site attribute of the visual unit 310 and the tabs 330 in the Z axis one by one. If the Z axis tab 330 of the visual unit 310 is not added, the UI 140 will render the Z axis tab 330; if the site attribute of the visual unit 310 is consistent with a tab 330 in the Z axis, it indicates that the Z axis tab 330 corresponding to the visual unit 310 has been added. Then the UI 140 will render the visual unit 310 on the UI layer corresponding to the Z axis tab 330 based on the attribute of the visual units 310. The local running UI 140 also provides supports to operations such as increasing/reducing the number of the segments in the layer 320 in the Y axis dimension, dragging the visual unit 310, deleting the visual unit 310, exchanging / deleting the Z axis tabs 330.

Based on the attributes of the visual unit 310, the UI 140 running on the local computer 810 can limit the moving scope of the visual unit 310 in the UI layer through the local computer 810. When the visual unit 310 being dragged is dropped, the local computer 810 will compare the coordinate value of the position of the visual unit 310 with the corresponding attribute value. If the logic is inconformity, then the "non-draggable" is executed, and the dragged visual unit 310 will be returned back in situ. In practical applications, the execution of "non-draggable" can be replaced with a warning, or other identification as popping up a dialog box.

When the user submits the arranged UI 140, the UI 140 will send a request to the server 410. At this time, the server 410 will record the coordinate value of all the visual units 310 in the UI 140. For example, the X axis coordinate of the visual unit 310 is determined from its relative position to the layer 320, the Y axis coordinate of the visual unit 310 is determined from the deviation value in the Y axis dimension and the first layer 320, and the Z axis coordinate is determined from the position of the tab 330.

The interaction operation in an offline state doesn't require the server 410. At this time the UI 140 can obtain each attribute value of the visual unit 310 through user's manual input, or a series of attributes of the visual units 310 can be imported into the UI 140 with files or other similar approaches. Other operations are the same as the asynchronous interaction mode mentioned above.

The visual units 310 in the UI 140 can also indicate other meanings, and have other attributes, such as standard item element SIE (Standard Item Element). Taking purchasing schedule for an SIE of clothes as an example, this SIE has three attributes: price, category, and brand. The X axis dimension along the horizontal direction is the price axis, with the price scope from 0-10,000. The Y axis dimension along the vertical dimension is the category: such as shirt, jeans. The first Z axis dimension tab rendered in the area adjacent to the plane determined by the X axis dimension and Y axis dimension, indicates the third attribute: brand. The UI with this type of visual unit has the same commands of ADD, DRAG, DELETE, and EXCHANGE with the visual units 310 above. The difference is, this time the price scope indicated by the X axis dimension will be defined by the market price and the experienced price set by the server. On the Y axis dimension, the UI may set different tabs, such as a coat tab, a jeans tab. And in each tab, the UI can respond to users' request to accumulate the X axis dimensions in this tab. In this UI, the brands as tabs in the Z axis dimensions can be exchanged.

Although the objects mentioned in this UI are the visual units 310, and the user interface has a three-dimensional structure, it's easy to be understood that specific functions and behaviors of the present invention will not only be the visual units 310 having the time, date, and site attributes or the UI 140 with a three-dimensional structure. For example, multiple fourth dimensions may be the superposed with the similar X axis dimension 110 and Z axis dimension 130, as shown in figure 9. Moreover, specific functions and behaviors of the present invention mentioned above are described with a specific embodiment. All the changes similar, modified, or based on the present invention teaching described herein will be protected.

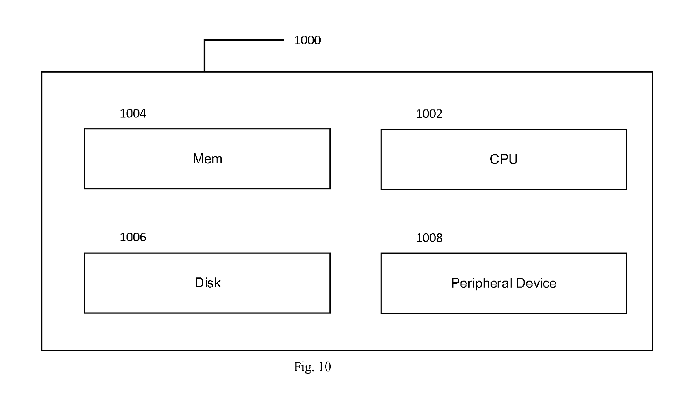

The computing device implementing the user interface of the present invention is shown in Figure 10, such as a computer 1000. The computer 1000 typically includes a processing unit 1002, a memory 1004, a magnetic disk 1006 and a peripheral equipment 1008. The memory 1004 typically includes operating system, one or more program modules, and may also include data. The peripheral equipment 1008 may include a mouse, a keyboard and a network communication device.

For example, a person with common computer software technology can realize that the user terminal/ server equipment mentioned in the present invention, the content in the user interface, and / or the data transfer approach described in this embodiment may be described in another form on one or more computers with more or less choices or other functions.

## Claims

1. A method for implementing a graphic user interface which is capable of manipulating multiple visual units, includes:
in response to a user's request for adding a first visual unit, rendering a first plane with X axis dimension and Y axis dimension in the display device; rendering in an area adjacent to the first plane a first Z axis dimension tab, wherein the first Z axis dimension tab is associated with the first plane and an attribute value of the first Z axis dimension tab is associated with an value of an attribute of the first visual unit; rendering the first visual unit in the first plane;
in response to the user's request for adding a second visual unit, if a value of the first attribute of the second visual unit has association relationship with the attribute value of the first Z axis dimension tab, rendering the second visual unit in the first plane; and,
in response to the user's drag operation, the first visual unit and the second visual unit can be moved in the first plane.

2. The method of claim 1, wherein,
if the value of the first attribute of the second visual unit does not have association relationship with the attribute value of the first Z axis dimension tab, then rendering a second Z axis dimension tab in an adjacent position of the first Z axis dimension tab, wherein the second Z axis dimension tab has the attribute value associated with the value of the first attribute of the second visual unit, rendering a second plane in a position adjacent to the second Z axis dimension tab, wherein the second plane also has a X axis dimension and a Y axis dimension, rendering the second visual units in the second plane; and, in response to the user's drag operation, the first visual unit can be moved in the first plane, the second visual unit can be moved in the second plane.

3. The method of claim 2, wherein,
in response to the user's request for activating the first Z axis dimension tab, hiding the second plane, and showing the first plane;
in response to the user's request for activating the second Z axis dimension tab, hiding the first plane, and showing the second plane.

4. The method of any one of the claims 1-3, wherein,
the first visual unit has a second attribute, in response to the user's drag operation, the second attribute will restrict the scope in which the first visual unit can be moved on the X axis dimension of the first plane.

5. The method of any one of the claims, wherein,
the first visual unit has a third attribute, in response to the user's drag operation, the third attribute will restrict the scope in which the first visual unit can be moved on the Y axis dimension of the first plane.

6. According to the method of claim 1, includes, in response to the user's request for adding one or more segments to the first plane along the Y axis dimension, increasing the length of the first plane along the Y axis dimension in proportion to the number of requested adding segment, wherein the second attribute of the first visual unit is associated with one or more Y axis segments, and the first visual unit can be moved in the first plane.

7. The method of claim 1 or 2, includes, in response to the user's request for adding the first visual unit or the second visual unit, acquiring the attribute information of the first visual unit or the second visual units from the server; in response to the user's drag operation to the first visual unit or the second visual units, sending the coordinate information of the X axis and Y axis dimension in which the first visual unit or the second visual unit are placed to the server.

8. The method of claim 2, includes, in response to the user dragging the first Z axis dimension tab to the position of the second Z axis dimension tab, exchanging positions of the first Z axis dimension tab with the second Z axis dimension tab; after the exchange the first Z axis dimension tabs is associated with the first plane, and the second Z axis dimension tabs is associated with the second plane; and sending the position value of the first Z axis tab after the exchange with the second Z axis tab to the server.

9. The method of claim 4 or 5, includes, in response to the user's drag operation, sending coordinate information of the position in which the dragged visual unit is placed to the server, then the server determines whether the target position of the drag operation to the visual unit exceeds the scope of movement restricted by the first attribute, the second attribute, or the third attribute, if the target position of the drag operation to the visual unit exceeds the scope of movement restricted by the first attribute, the second attribute or the third attribute, then the first visual unit is returned back to the starting position of the drag operation, or a prompt message is displayed.

10. A system for implementing a graphic user interface capable of manipulating multiple visual units, includes:
a first module, used for in response to a user's request for adding a first visual unit, rendering the first plane with X axis dimension and Y axis dimension on the display device; and rendering the first Z axis dimension tab in an area adjacent to the first plane, wherein the first Z axis dimension tab is associated with the first plane, and the attribute value of the first Z axis dimensions tab is associated with the value of the first attribute of the first visual unit; and rendering the first visual unit in the first plane;
a second module, used for in response to the user's request for adding the second visual unit, if the value of the first attribute of the second visual unit has association relationship with the attribute value of the first Z axis dimension tab, rendering the second visual unit in the first plane; and
a third module, used for in response to the user's drag operation, wherein the first visual unit and the second visual unit can be moved in the first plane.
